# FASCICULE DE BREVET EUROPEEN

(11) **EP 0 381 603 B1**
(45) Date de publication et mention de la délivrance du brevet: **13.01.1993**
(21) Numéro de dépôt: 90420050.8
(22) Date de dépôt: 30.01.1990
(51) Int. Cl.: B21D 19/04, F16L 19/025

(54) **Procédé de réalisation d'un raccord étanche pour tube rigide et raccord en résultant**
Verfahren zur Herstellung einer Abdichtungsverbindung zwischen Hartrohren und damit hergestellte Rohrverbindung
Method for making a tight joint between rigid pipes, and joint obtained thereby

(30) Priorité: 30.01.1989 FR 8901373
(43) Date de publication de la demande: 08.08.1990
(73) Titulaire: PARKER HANNIFIN RAK S.A., 74108 Annemasse Cédex (FR)
(72) Inventeur: Badoureaux, Jean-Pierre, F-74250 Viuz-en-Sallaz (FR)
(74) Mandataire: Maureau, Pierre

(56) Documents cités:
- DE-A- 3 805 814
- DE-C- 122 330
- FR-A- 1 224 164
- FR-A- 2 555 669
- GB-A- 351 829
- GB-A- 734 227
- US-A- 169 229
- US-A- 2 423 246
- HYDRAULICS & PNEUMATICS, vol. 35, no. 4, avril 1982, pages 90-93, Cleveland, Ohio, US; "A basic quide to hydraulic tube fittings"
- LE VIDE LES COUCHES MINCES, no. 197, juin/juillet/août 1979, pages 217-244, Paris, FR; B.L. BLANC et al.: "Technologie de l'étanchéité"

## Description

La présente invention concerne un procédé de réalisation d'un raccord étanche pour tube rigide selon le préambule de la revendication 1. Un tel procédé est connu du document GB-A- 351 829.

Dans les installations de transport de fluides sous pression, hydrauliques ou pneumatiques, la liaison étanche des tubes rigides aux différents orifices des appareils de l'installation est généralement réalisée à l'aide de raccords pour collets, c'est-à-dire de raccords comportant un écrou épaulé intérieurement et engagé sur le tube à raccorder, un collet aménagé à l'extrémité à raccorder de ce tube et rendant l'écrou précité prisonnier de ce tube et un mamelon fileté solidaire de l'orifice d'appareil auquel ce tube doit être raccordé et sur lequel l'écrou précité est destiné à être vissé, la face frontale de ce mamelon contre laquelle est appliqué le collet du tube présentant un joint d'étanchéité disposé dans une gorge annulaire lui servant de logement.

Dans ces raccords, le collet du tube est un collet battu c'est-à-dire qu'il est obtenu par la frappe de l'extrémité considérée du tube préalablement placée dans une matrice, à l'aide d'une gamme d'outils calibrés permettant de déformer progressivement l'extrémité du tube jusqu'à l'obtention du collet.

Suivant un autre procédé connu, notamment par les brevets FR-A-2 555 669 et US-A-1 696 289, visant non seulement à diminuer le temps de fabrication de ce raccord mais encore à en réduire le coût, le collet du tube est réalisé par bouterollage, son extrémité de raccordement étant serrée, après engagement de l'écrou épaulé, dans une matrice ouvrante présentant une empreinte épaulée au profil du collet désiré.

Par le brevet GB 351.829, on connaît un procédé visant à ce que le plan de joint des deux parties ouvrantes de la matrice ne laisse des traces indésirables sur le collet du tube. Selon le procédé qui est du second type précité, l'empreinte de la matrice ouvrante est constituée par une douille épaulée destinée à rester prisonnière du raccord, entre le collet et l'écrou épaulé, la jupe cylindrique de cette douille étant destinée à être disposée entre le tube et l'épaulement intérieur de l'écrou tandis que son épaulement extérieur est destiné à reposer sur l'épaulement intérieur de l'écrou.

Le procédé de l'invention, qui fait l'objet de la revendication 1, vise à renforcer considérablement la tenue du raccord, notamment lorsqu'il est soumis à des pressions cyclées, ou à des vibrations. A cet effet, selon ce procédé, d'une part la douille est en un matériau dont le coefficient d'élasticité est au moins égal à celui du tube rigide et elle est montée dans la matrice ouvrante avec un léger jeu radial autorisant sa dilatation élastique et, d'autre part, le bossage central tronconique de la bouterolle est agencé pour décrire un cercle de diamètre légèrement supérieur à celui intérieur du tube, à l'extrémité duquel un collet est formé.

Ainsi, le bouterollage de l'extrémité du tube a aussi pour effet d'augmenter le diamètre intérieur du tube en dilatant son extrémité, dilatation que la paroi du tube transmet à la douille, cette dernière pouvant se dilater dans la limite du jeu radial prévu à cet effet entre elle et la matrice ouvrante. Cette dilatation de la douille étant limitée, par le jeu radial précité, à la valeur autorisée par l'élasticité de matière constitutive, après achèvement de l'opération de bouterollage et retrait de la bouterolle, la douille tend à reprendre sa forme initiale, ce qui provoque son serrage sur le tube rigide, à l'extrémité duquel elle se trouve frettée, en appui contre la face postérieure du collet.

Par exemple, lorsque le tube rigide dont l'extrémité doit être conformée en collet est en cuivre, la douille est, de préférence en acier.

De toute façon, l'invention sera bien comprise à l'aide de la description qui suit, en référence au dessin schématique annexé représentant, à titre d'exemple non limitatif, un raccord selon l'invention et un mode préféré de mise en oeuvre de son procédé de réalisation :
Figure 1 est une vue de côté en élévation avec demi-coupe axiale du raccord selon l'invention ;
Figures 2, 3, 4 et 5 illustrent le procédé de réalisation du raccord de figure 1 en représentant, vues en coupe axiale, quatre phases successives de la mise en oeuvre de ce procédé.

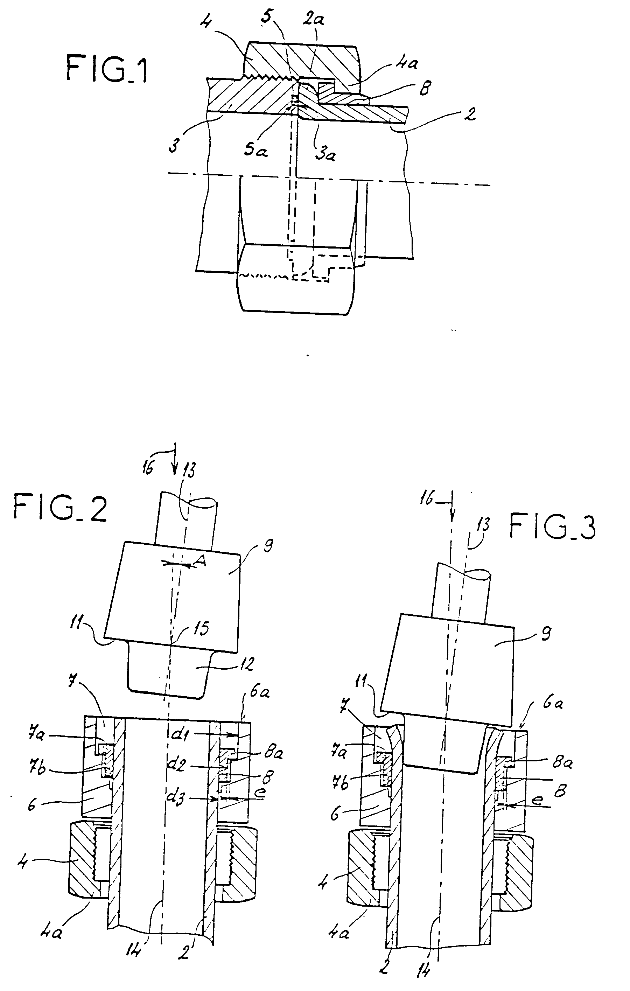

Comme le montre la figure 1, le raccord selon l'invention est destiné à permettre la liaison étanche entre un tube rigide 2 en acier, cuivre ou similaire et un mamelon fileté 3 solidaire d'un appareil fixe ou autre organe d'une installation de transport de fluide sous pression, non représentée sur le dessin, ce fluide pouvant être indifféremment hydraulique ou pneumatique. Le filetage du mamelon 3 est évidemment au même pas que celui de l'écrou 4 qui est destiné à être vissé sur lui.

Ce raccord est du type comportant un écrou épaulé 4 c'est-à-dire présentant, à l'une de ses extrémités, un épaulement intérieur 4a destiné à presser un collet 2a aménagé à l'extrémité à raccorder du tube 2 contre la face frontale 3a du mamelon 3.

L'étanchéité de ce raccord est généralement obtenue à l'aide d'un joint torique 5 disposé dans une gorge annulaire 5a aménagée dans la face frontale 3a du mamelon 3 pour lui servir de logement.

Le procédé selon l'invention est du type selon lequel le collet 2a du tube 2 est réalisé par bouterollage, et, par conséquent, selon lequel, après engagement de l'écrou épaulé 4 sur son extrémité à raccorder, le tube 2 est serré dans une matrice ouvrante 6, c'est-à-dire une matrice présentant une ouverture centrale traversante permettant le passage du tube 2 et qui est constituée d'au moins deux pièces complémentaires diamétralement opposées.

Selon l'invention, l'alésage 7 de cette matrice 6 présente deux gradins ou épaulements intérieurs 7a,7b déterminant trois tronçons successifs de diamètres intérieurs d1, d2 et d3, destinés à loger une douille 8 destinée à constituer l'empreinte de la matrice ouvrante 6, présentant un épaulement externe 8a et constituée en un matériau dont le coefficient d'élasticité est au moins égal à celui du matériau constitutif du tube rigide :
- le diamètre d1 est au moins égal au diamètre extérieur du collet 2a que doit présenter le tube 2 en fin d'opération de bouterollage et légèrement supérieur à celui externe de l'épaulement 8a de la douille 8 ;
- le diamètre d2, plus petit que le diamètre d1, est légèrement supérieur au diamètre extérieur de la douille 8 qui est destinée à être insérée entre l'épaulement 4a de l'écrou 4 et le tube 2 et dont l' épaulement externe 8a est destiné à être pris en sandwich entre la face postérieure du collet 2a du tube 2 et l'épaulement interne 4a de l'écrou 4; ce diamètre d2 est sensiblement égal au diamètre intérieur de l'épaulement 4a de l'écrou 4 ;
- le diamètre d3, plus petit que le diamètre d2, est sensiblement égal au diamètre extérieur du tube 2 et est déterminé de manière précise de façon à assurer le serrage de ce tube lorsque la matrice est en position de travail, comme illustré sur les figures 2 à 4.

Le fait que les diamètres d2 et d1 de l'alésage 7 de la matrice ouvrante 6 soient légèrement supérieurs aux diamètres extérieurs, respectivement, de la douille 8 et de son épaulement 8a, a pour effet la création, entre la douille 8 et la matrice ouvrante 6 d'un jeu radial "e" autorisant une dilatation de la douille 8 dans la limite de son élasticité.

Lors de la réalisation du collet 2a par bouterollage, le tube 2 est placé dans la matrice 6 de manière que son extrémité à laquelle doit être réalisé le collet 2 soit disposée dans le même plan que la face antérieure 6a de la matrice 6 car la profondeur du premier gradin 7a est déterminée en fonction de l'épaisseur de l'épaulement 8a de la douille pour que la longueur du tube 2 située en avant de la face externe de l'épaulement 8a de la douille 8 corresponde à la longueur utile à la réalisation du collet 2a.

Le tube 2 étant placé dans la matrice 6 et cette dernière étant resserrée sur lui pour en assurer la tenue axiale, la douille 8 est engagée sur l'extrémité antérieure du tube 2 de manière que, comme indiqué sur les figures 2 à 5 du dessin, son épaulement repose sur le premier gradin 7a de l'empreinte 7 et sa jupe cylindrique soit logée dans la partie de diamètre d2 de cette empreinte.

La déformation de l'extrémité libre du tube 2 est ensuite réalisée par bouterollage c'est-à-dire à l'aide d'un outil 9 dénommé bouterolle, dont la face de travail, orientée en direction du tube 2, présente la forme d'une face plane annulaire 11 entourant un bossage central tronconique 12 de centrage destiné à être engagé dans l'extrémité du tube 2 pour assurer le guidage de la bouterolle 9 et dont l'axe de révolution 13 est incliné d'un angle A par rapport à l'axe 14 du tube 2 et de la matrice 6, ces deux axes convergeant en un point 15 situé dans le même plan que la face plane annulaire de travail 11 de la bouterolle 9.

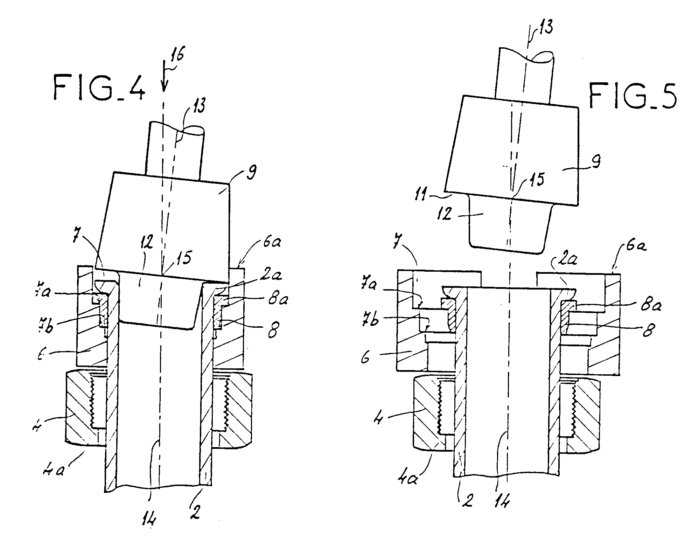

Comme cela est connu en soi, l'axe 13 de la bouterolle 9 est entraîné par son porte-outil de manière à décrire un cône autour de l'axe 14 du tube 2, comme illustré sur les figures 3 et 4 et à être déplacée en direction du tube 2, c'est-à-dire dans le sens des flèches 16.

En outre, comme elle est montée dans son porte-outil, non représenté sur le dessin, de façon connue en soi par l'intermédiaire de paliers à billes ou similaire, sa face annulaire de travail 11 roule sans glissement, mais en la pressant, sur l'extrémité libre du tube 2, en la déformant, comme illustré sur la figure 3, jusqu'à formation, à cette extrémité, du collet 2a tel qu'illustré sur la figure 4.

Par ailleurs, comme l'illustre plus particulièrement la figure 3, le bossage tronconique central 12 de la bouterolle 9 est agencé pour décrire un cercle de diamètre légèrement supérieur à celui intérieur du tube rigide 2. Il en résulte qu'il exerce sur ce dernier une pression radiale dirigée vers l'extérieur, et directement communiquée à la douille 8. Le jeu radial "e" qui entoure cette dernière autorise sa dilatation et celle du tube rigide 2 dans la limite de l'élasticité de la douille 8.

Après achèvement de l'opération de bouterollage, la bouterolle 9 est retirée et son bossage 12 cesse d'agir sur le tube rigide 2 pour le dilater. La douille 8 tend, du fait de son élasticité, à reprendre sa dimension d'origine et, de ce fait, exerce, sur le tube rigide 2, une pression radiale dirigée vers l'intérieur et par l'effet de laquelle elle se trouve serrée ou frettée sur le tube 2, en appui contre la face postérieure de son collet 2a.

Le raccord est alors terminé puisque l'écrou 4 et la douille 8 sont prisonniers du tube 2. Il suffit donc d'ouvrir la matrice 6 pour ensuite raccorder le tube 2 muni de son collet 2a au mamelon 3 auquel il est destiné.

La fixation, par frettage, de la douille 8 au tube rigide 2 renforce considérablement la tenue mécanique de ce raccord, notamment lorsqu'il est soumis à des variations de pressions brutales ou à des vibrations.

## Revendications

1. Procédé de réalisation d'un raccord étanche pour tube rigide du type comportant un écrou épaulé intérieurement (4) et engagé sur le tube à raccorder (2), un collet (2a) aménagé à l'extrémité à raccorder de ce tube (2) et rendant l'écrou (4) prisonnier de ce tube et un mamelon fileté (3) solidaire de l'orifice d'appareil ou autre organe auquel ce tube (2) doit être raccordé et sur lequel l'écrou (4) est destiné à être vissé, la face frontale (3a) de ce mamelon (3) contre laquelle est appliqué le collet (2a) du tube (2) présentant un joint d'étanchéité (5) disposé dans une gorge annulaire (5a) lui servant de logement, ce procédé étant du type selon lequel le collet (2a) du tube (2) est réalisé par bouterollage, son extrémité de raccordement étant serrée, après engagement de l'écrou épaulé (4), dans une matrice ouvrante (6) présentant une empreinte épaulée au profil du collet (2a) désiré, et constituée par une douille épaulée (8) destinée à rester prisonnière du raccord, entre le collet (2a) et l'écrou épaulé (4), la jupe cylindrique (8a) de cette douille (8) étant destinée à être disposée entre le tube (2) et l'épaulement intérieur (4a) de l'écrou (4) tandis que son épaulement extérieur (8a) est destiné à reposer sur l'épaulement intérieur (4a) de l'écrou (4), caractérisé en ce que, d'une part la douille (8) est en un matériau dont le coefficient d'élasticité est au moins égal à celui du matériau constitutif du tube rigide (2) et elle est montée dans la matrice ouvrante (6) avec un léger jeu radial (e) autorisant sa dilatation élastique et, d'autre part, le bossage central tronconique (12) de la bouterolle (9) est agencé pour décrire un cercle de diamètre légèrement supérieur à celui intérieur du tube (2), à l'extrémité duquel un collet (2a) est formé.

2. Procédé selon la revendication 1, caractérisé en ce que, lorsque le tube rigide (2) est en cuivre, la douille (8) est en acier.

## Patentansprüche

1. Verfahren zur Herstellung einer Abdichtverbindung für starre Rohre von der Art, die eine innen abgestufte und auf dem zu verbindenden Rohr (2) angeordnete Mutter (4), einen am zu verbindenden Ende dieses Rohres (2) vorgesehenen und die Mutter (4) zur Gefangenen dieses Rohres machenden Kragen (2a) und ein Gewinde-Anschlußstück (3), verbunden mit der Öffnung des Gerätes oder anderen Organes, mit dem dieses Rohr (2) verbunden werden soll und auf das die Mutter (4) aufzuschrauben ist, umfaßt, wobei die vordere Fläche (3a) dieses Anschlußstückes (3), gegen die der Kragen (2a) des Rohres (2) arbeitet, einen in einer ihm als Aufnahme dienenden ringförmigen Vertiefung angeordneten Dichtring (5) aufweist, wobei das Verfahren von der Art ist, gemäß welcher der Kragen (2a) des Rohres (2) durch Umformen beziehungsweise Wälzumformen hergestellt wird, wobei dessen Verbindungsende nach dem Anbringen der abgestuften Mutter (4) in einer zu öffnenden Matrize (6) eingespannt wird, die eine formgebende Partie aufweist, die gemäß dem Profil des gewünschten Kragens (2a) abgestuft ist, und die durch einen abgestuften Ring (8) gebildet ist, der dazu bestimmt ist, zwischen den Kragen (2a) und der abgestuften Mutter (4) Gefangener der Verbindung zu bleiben, wobei der zylindrische Mantel (8a) dieses Ringes (8) dazu bestimmt ist, zwischen dem Rohr (2) und dem inneren Ansatz (4a) der Mutter (4) angeordnet zu werden, während sein äußerer Ansatz (8a) dazu bestimmt ist, auf dem inneren Ansatz (4a) der Mutter (4) zu ruhen, dadurch gekennzeichnet, daß einerseits der Ring (8) aus einem Material besteht, dessen Elastizitätskoeffizient wenigstens gleich demjenigen des das starre Rohr (2) bildenden Materials ist und er in der zu öffnenden Matrize (6) mit einem leichten Radialspiel (e) angeordnet ist, das seine elastische Aufweitung zuläßt, und daß andererseits der zentrale kegelstumpfartige Vorsprung (12) des Umformwerkzeuges (9) zum Beschreiben eines Kreises mit leicht größerem Durchmesser als dem Innendurchmesser des Rohres (2) eingerichtet ist, an dessen Ende ein Kragen (2a) ausgebildet wird.

2. Verfahren gemäß Anspruch 1, dadurch gekennzeichnet, daß bei aus Kupfer bestehendem starrem Rohr (2) der Ring (8) aus Stahl besteht.

## Claims

1. A method of making a sealed joint for rigid pipes of the type having an internally shouldered nut (4) engaged on the pipe (2) to be joined, a flange (2a) formed at the end to be joined of the tube (2) and rendering the nut (4) captive on the pipe and a threaded boss (3) rigid with the orifice of the apparatus or other member to which this tube (2) is to be joined and on which the nut (4) is intended to be screwed, the front face (3a) of this boss (3) against which is applied the flange (2a) of the pipe (2) having a seal (5) disposed in an annular groove (5a) acting as its housing, this method being of the type according to which the flange (2a) of the pipe (2) is formed by snapping, its connecting end being gripped, after engagement of the shouldered nut (4), in a working die (6) having an impression shouldered to the desired profile of the flange (2a) and constituted by a shouldered sleeve (8) intended to remain captive in the joint between the flange (2a) and the shouldered nut (4), the cylindrical skirt (8a) of this sleeve (8) being intended to be disposed between the tube (2) and the internal shoulder (4a) of the nut (4) whilst its external shoulder (8a) is intended to rest on the internal shoulder (4a) of the nut (4), characterised in that, on the one hand, the sleeve (8) is of a material of which the coefficient of elasticity is at least equal to that of the constituent material of the rigid pipe (2) and it is mounted in the opening die (6) with a slight radial play (e) allowing its resilient expansion and, on the other hand, the truncated cone-shaped central boss (12) of the snapping die (9) is arranged to describe a circle of slightly greater diameter than the internal diameter of the pipe (2), at the end of which a flange (2a) is formed.

2. A method according to Claim 1, characterised in that when the rigid pipe (2) is of copper, the sleeve (8) is of steel.
